# EUROPÄISCHE PATENTSCHRIFT

(11) **EP 2 652 550 B1**
(45) Veröffentlichungstag und Bekanntmachung des Hinweises auf die Patenterteilung: **05.06.2019**
(21) Anmeldenummer: 11794658.2
(22) Anmeldetag: 14.12.2011
(51) Int. Cl.: G03B 21/00, G03B 21/08, G03B 21/20, B60Q 3/14

(54) **OPTISCHE PROJEKTIONSVORRICHTUNG**
OPTICAL PROJECTION DEVICE
DISPOSITIF DE PROJECTION OPTIQUE

(30) Priorität: 14.12.2010 DE 102010054449
(43) Veröffentlichungstag der Anmeldung: 23.10.2013
(73) Patentinhaber: TRW Automotive Electronics & Components GmbH, 78315 Radolfzell (DE)
(72) Erfinder: BACKES, Ulrich, 78315 Radolfzell (DE); KÖHNLEIN, Harald, 78244 Gottmadingen (DE)
(74) Vertreter: Prinz & Partner mbB
(86) Internationale Anmeldenummer: PCT/EP2011/006317
(87) Internationale Veröffentlichungsnummer: WO 2012/079758

(56) Entgegenhaltungen:
- EP-A1- 2 015 126
- WO-A2-2008/016908
- CH-A- 212 756
- DE-A1- 1 547 361
- DE-A1-102008 000 375
- DE-T2- 60 101 757
- FR-A1- 2 578 797
- FR-A1- 2 705 293
- US-A1- 2005 157 499

## Beschreibung

Die Erfindung betrifft eine optische Projektionsvorrichtung für einen Fahrzeug-Innenraum.

Optische Projektionsvorrichtungen mit einer vom Strahlengang durchleuchteten optischen Maske, beispielsweise einem Diapositiv, sind seit langem bekannt. In der einfachsten Form einer optischen Projektionsvorrichtung wird eine Punktlichtquelle benutzt, von der ausgehend ein divergierendes Strahlenbündel die optische Maske durchquert und auf einem Projektionsschirm auftrifft. Da bei einer solchen einfachen optischen Projektionsvorrichtung nur ein kleiner Teil der von der Punktlichtquelle ausgehenden Strahlung genutzt werden kann, wird in klassischen Projektionsvorrichtungen die teilweise transmissive Maske möglichst gleichmäßig mittels einer Beleuchtungsanordnung bei möglichst großer Ausnutzung der Lichtquellenabstrahlung beleuchtet, während eine optische Abbildungsanordnung der möglichst präzisen Abbildung der flächigen Objektgeometrie der Maske auf die reflektive oder transmissive Projektionsfläche dient. Auch bei einem solchen herkömmlichen Projektionssystem ist die Lichtausbeute typischerweise relativ gering, da ein erheblicher Teil des Lichts durch Streuung verloren geht. Außerdem ist der Material- und Konstruktionsaufwand für ein solches System sehr hoch.

In der CH 212 756 A ist eine Wechselzeichenanordnung offenbart, wobei jedem darzustellenden Zeichen eine Blende und eine Lichtquelle zugeordnet sind. Die Blenden und Lichtquellen sind derart angeordnet, dass das Bild jedes Zeichens an der gleichen Stelle eines Auffangschirms erscheint.

Die DE 15 47 361 A1 zeigt ein Zeichenprojektionsgerät, bei dem mittels mehrerer Projektionssysteme verschiedene Zeichen auf einem Bildschirm angezeigt werden können. Jedes Projektionssystem weist eine Lichtquelle, eine Kondensor und eine Zeichenmaske auf. Jeder Kondensor besteht aus einer Kollimatorlinse und Sammellinse, wobei die Zeichenmaske zwischen der Kollimatorlinse und der Sammellinse angeordnet ist.

In der US 2005/157499 A1 ist ein beleuchtetes interaktives Unterhaltungssystem gezeigt. Das Unterhaltungssystem umfasst eine Lichtquelle, einen transparenten Schieberhalter mit Steckplätzen und Schieber, die dazu ausgebildet sind, in die Steckplätze eingeschoben zu werden. Bilder auf den Schiebern können so auf eine geeignete Oberfläche projiziert werden.

Die DE 10 2008 000 375 A1 offenbart ein Verkleidungselement mit einer Anzeigevorrichtung sowie ein Verfahren zur Herstellung solch eines Elements. Das Verkleidungselement umfasst eine Hintergrundbeleuchtung, eine Maske sowie eine Oberflächenhaut. Die Hintergrundbeleuchtung beleuchtet die Maske und deren Projektion wird in einer Anzeigezone der Oberflächenhaut angezeigt.

In der WO 2008/016908 A2 ist eine Lichtquelle mit einem LED-Emitter und einer Meniskuslinse gezeigt. Zwischen Linse und Emitter ist ein Hohlraum gebildet. Die Linse ist dazu ausgebildet, ein qualitativ hochwertiges Bild vom Emitter zu erzeugen.

Es besteht ein Bedarf für eine einfache optische Projektionsvorrichtung, die eine hohe Lichtausbeute hat. Gelöst wird diese Aufgabe erfindungsgemäß mit einer optischen Projektionsvorrichtung mit den Merkmalen des Anspruchs 1. Die optischen Linsen können jeweils nahe der zugeordneten Punktlichtquelle angeordnet werden und nehmen so den größten Teil der von diesen ausgehenden optischen Strahlung auf. Daraus resultiert die hohe Lichtausbeute. Die von der Austrittsfläche der Linsen ausgehenden Projektionsstrahlen durchqueren die Maske und treffen direkt auf der Projektionsfläche des Projektionsschirms auf, wobei außer durch die Maske selbst keine Verluste an Lichtintensität auftreten. Für eine gegebene Helligkeit des projizierten Bildes wird daher nur eine geringe Lichtintensität aus der Punktlichtquelle benötigt.

Die Geometrie der optischen Linse wird weitgehend durch den verfügbaren Bauraum bestimmt. Da die Linse lichtbündelnde Eigenschaften hat, ist sie auf der Austrittsseite typischerweise konvex. Die Lichteintrittsfläche der Linse kann plan oder auch konkav sein.

Um mehrere Symbole gemeinsam oder getrennt auf einer gemeinsamen Projektionsfläche anzeigen zu können, durchqueren die von den mehreren Punktlichtquellen ausgehenden Projektionsstrahlen unterschiedliche Flächenbereiche der Maske und nehmen auf dem Projektionsschirm eine gemeinsame Projektionsfläche ein.

Die erfindungsgemäße optische Projektionsvorrichtung eignet sich gut als Symbol-Anzeigeelement für einen Fahrzeug-Innenraum. In diesem Fall ist der Projektionsschirm durch eine Frontabdeckung des Symbol-Anzeigeelements gebildet. Die Symbole können einzeln oder auch gemeinsam angezeigt werden. Dazu werden die verschiedenen Punktlichtquellen geeignet angesteuert.

Weitere Merkmale und Vorteile der Erfindung ergeben sich aus der folgenden Beschreibung mehrerer Vergleichsbeispiele und eines erfindungsgemäßen Ausführungsbeispiels und aus den beigefügten Zeichnungen, auf die Bezug genommen wird. Dabei dienen die beschriebenen Ausführungsformen der Vergleichspeispiele und des Ausführungsbeispiels dem Verständnis der Erfindung, welche durch die Ansprüche definiert wird.

In den Figuren zeigen:
- Figur 1 eine einfache Bildprojektionsvorrichtung mit lediglich einer Punktlichtquelle, einer Maske und einem Projektionsschirm;
- Figur 2 eine Projektionsvorrichtung;
- Figur 3 eine Projektionsvorrichtung mit einer speziellen lichtbündelnden Linse;
- Figur 4 eine Ausführungsform der Projektionsvorrichtung mit gekippter Linse; und
- Figur 5 eine erfindungsgemäße Ausführungsform einer Doppel-Projektionsvorrichtung.

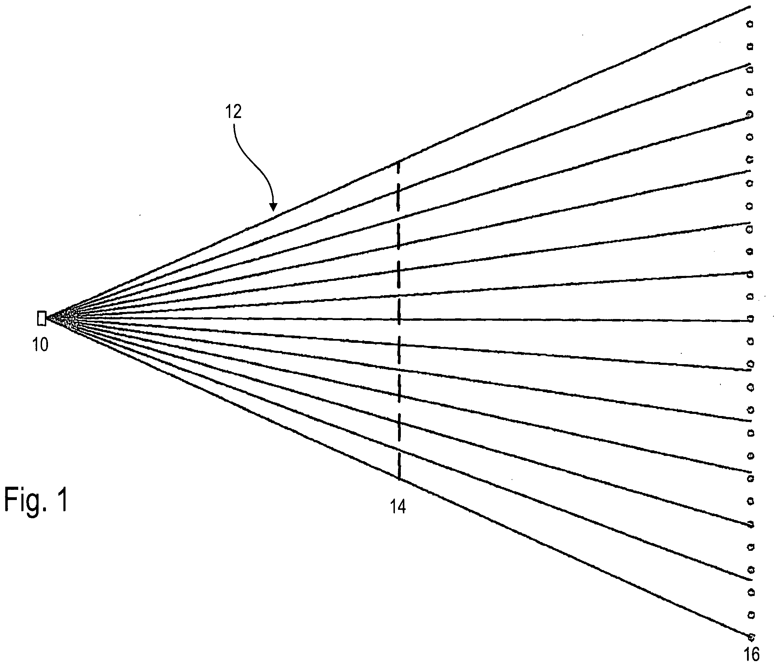

Eine denkbar einfache optische Projektionsvorrichtung ist in Figur 1 dargestellt. Sie besteht aus einer Punktlichtquelle 10, die ein divergierendes Strahlenbündel 12 aussendet, einer bereichsweise lichtdurchlässigen optischen Maske 14 sowie einem Projektionsschirm 16, der durch eine Streuscheibe gebildet sein kann. In Figur 1 ist nur der die Maske 14 durchquerende Teil des divergierenden Lichtbündels 12 dargestellt. Tatsächlich hat das von der Lichtquelle 10 ausgehende Licht einen viel größeren Öffnungswinkel, sodass nur ein kleiner Teil davon genutzt wird. Diese optische Projektionsvorrichtung hat daher eine geringe Lichtausbeute. Außerdem benötigt sie in axialer Richtung einen großen Bauraum.

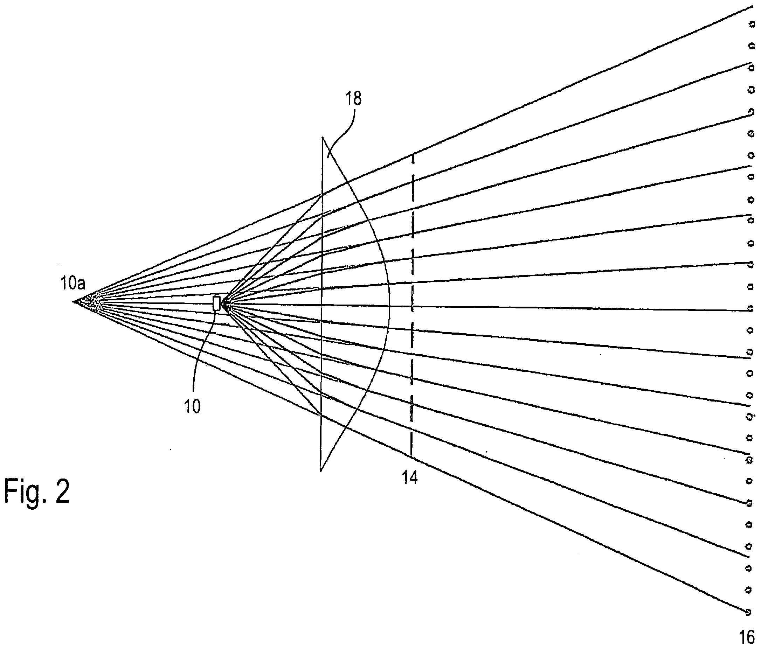

Die in Figur 2 gezeigte Projektionsvorrichtung ist ähnlich aufgebaut wie die in Figur 1 gezeigte, hat jedoch im Strahlengang zwischen der Punktlichtquelle 10 und der optischen Maske 14 eine optische Linse 18 mit lichtbündelnden Eigenschaften. Bei der gezeigten Ausführungsform ist die Eintrittsfläche der Linse 18 plan, und die Austrittsfläche ist konvex gewölbt. Die Geometrie der Linse 18 ist so bestimmt, dass die Austrittsstrahlen der Linse 18 auf deren der Punktlichtquelle 10 zugewandten Seite sich in einem virtuellen Projektionszentrum 10a schneiden, das von der Linse 18 weiter entfernt ist als die Punktlichtquelle 10. Die Punktlichtquelle 10 kann sehr nahe an der Eintrittsfläche der optischen Linse 18 angeordnet werden, sodass der größte Teil der von ihr ausgehenden Lichtstrahlung von der Linse 18 aufgenommen wird. Dadurch ergibt sich eine hohe Lichtausbeute. Außerdem wird gegenüber der in Figur 1 gezeigten Projektionsvorrichtung die axiale Baulänge erheblich reduziert.

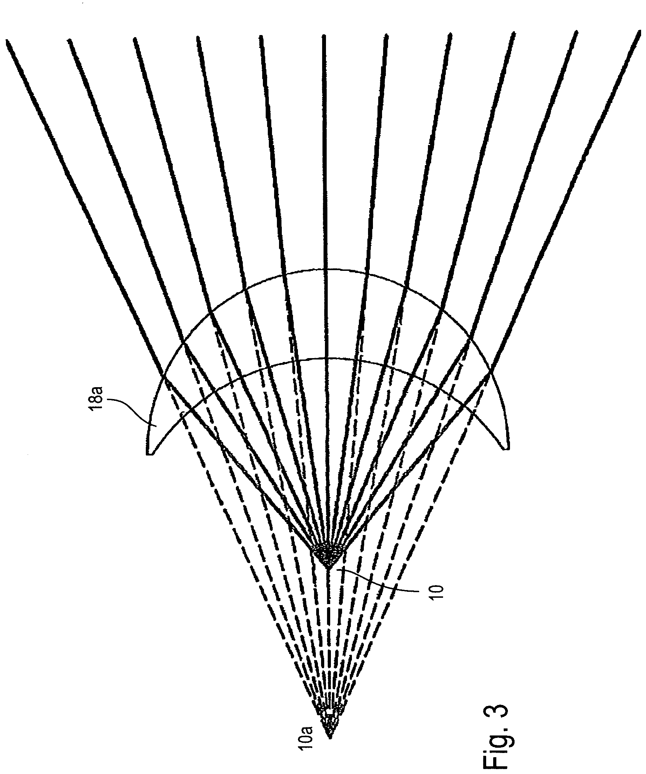

Die in Figur 3 gezeigte Ausführungsform der Linse 18a mit einer konkaven Eintrittsfläche und einer konvexen Austrittsfläche ermöglicht eine besonders kompakte Bauform. Die Punktlichtquelle 10 kann hier noch näher an der Eintrittsfläche der Linse 18a angeordnet werden, wodurch sich eine kompakte Bauform bei nochmals gesteigerter Lichtausbeute ergibt.

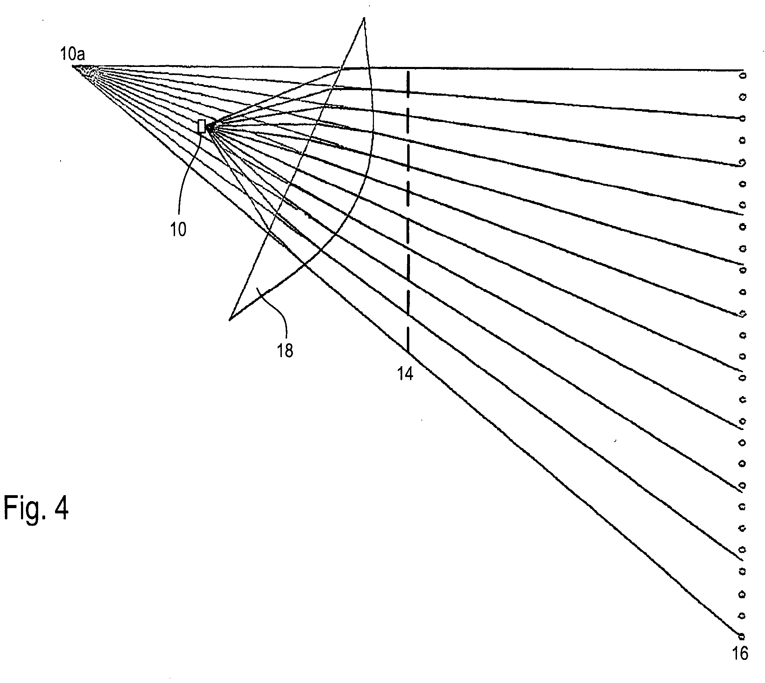

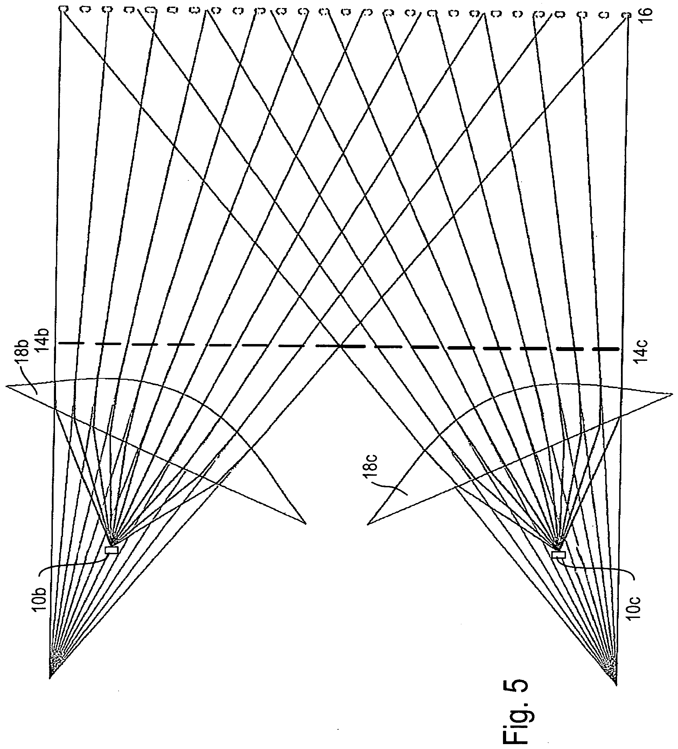

Die Ausführungsform in Figur 4 unterscheidet sich von der in Figur 2 dadurch, dass die Linse 18 gegen die Ebenen der Maske 14 und des Projektionsschirms 16 gekippt ist. Dadurch ist eine Anpassung an vorgegebene bauliche Verhältnisse möglich. Außerdem lässt sich diese Anordnung gut in einer weiteren, in Figur 5 gezeigten Ausführungsform der Projektionsvorrichtung einsetzen.

Die in Figur 5 gezeigte erfindungsgemäße Ausführungsform der optischen Projektionsvorrichtung enthält zwei spiegelsymmetrisch angeordnete Projektionssysteme, jeweils mit einer Punktlichtquelle, einer Linse, einer optischen Maske und einem gemeinsamen Projektionsschirm. Das erste Projektionssystem ist genauso aufgebaut und angeordnet wie das in Figur 4. Es enthält demnach eine erste Punktlichtquelle 10b, eine erste Linse 18b, eine erste Maske 14b sowie den Projektionsschirm 16. Das zweite Projektionssystem enthält eine Punktlichtquelle 10c, eine Linse 18c, eine optische Maske 14c sowie den Projektionsschirm 16. Man erkennt, dass die beiden Projektionssysteme auf der Austrittsseite der Linsen 18b, 18c zwar getrennte Bereiche einer optischen Maske durchleuchten, jedoch auf dem Projektionsschirm 16 eine gemeinsame Projektionsfläche einnehmen. Durch selektive Aktivierung der Punktlichtquellen 10b und 10c können somit verschiedene Symbole auf derselben Projektionsfläche des Projektionsschirms 16 angezeigt werden. Es können aber auch kombinierte Symbole dargestellt werden, indem beide Punktlichtquellen gleichzeitig aktiviert werden. Selbstverständlich kann die Anzahl von Projektionssystemen größer als zwei sein, und die von den verschiedenen Projektionssystemen erzeugten Symboldarstellungen müssen nicht dieselbe Projektionsfläche auf dem Projektionsschirm einnehmen.

Eine besondere Anwendung der optischen Projektionsvorrichtung, insbesondere in der in Figur 5 gezeigten Ausgestaltung, ist ein Symbol-Anzeigeelement für einen Fahrzeug-Innenraum. Bei einer solchen Anwendung ist der Projektionsschirm durch eine Frontabdeckung des Symbol-Anzeigeelements gebildet, die als Streuscheibe wirkt.

## Patentansprüche

1. Optische Projektionsvorrichtung für einen Fahrzeug-Innenraum, mit mehreren Punktlichtquellen (10, 10b, 10c), einem Projektionsschirm (16), einer im Strahlengang vor dem Projektionsschirm (16) angeordneten bereichsweise lichtdurchlässigen Maske (14, 14b, 14c) und mehreren lichtbündelnden optischen Linsen (18, 18a, 18b, 18c), die jeweils einer der Punktlichtquellen (10, 10b, 10c) zugeordnet sind und die zwischen der zugeordneten Punktlichtquelle (10, 10b, 10c) und der Maske (14, 14b, 14c) angeordnet sind, wobei die Verlängerungen der Austrittsstrahlen der optischen Linsen (18, 18a, 18b, 18c) auf deren der Punktlichtquelle (10, 10b, 10c) zugewandten Seite sich jeweils in einem virtuellen Projektionszentrum (10a) schneiden, das von der Linse (18, 18a, 18b, 18c) weiter entfernt ist als die Punktlichtquelle (10, 10b, 10c), wobei mehrere der optischen Linsen (18, 18a, 18b, 18c) mit jeweils zugeordneter Punktlichtquelle (10, 10b, 10c) gegen die Ebenen des Projektionsschirms und der Maske (14, 14b, 14c) entgegengesetzt gekippt angeordnet sind, **dadurch gekennzeichnet, dass** die von den mehreren Punktlichtquellen (10b, 10c) ausgehenden und aus den zugehörigen Linsen (18b, 18c) austretenden Projektionsstrahlen bis zu der Maske (14b, 14c) optisch gegeneinander abgeschirmt sind.

2. Optische Projektionsvorrichtung nach Anspruch 1, bei der die optische Linse (18, 18a, 18b, 18c) eine konvexe Austrittsfläche und eine plane oder konkave Eintrittsfläche aufweist.

3. Optische Projektionsvorrichtung nach Anspruch 1 oder 2, bei der die von den mehreren Punktlichtquellen (10b, 10c) ausgehenden und aus den zugehörigen Linsen (18b, 18c) austretenden Projektionsstrahlen unterschiedliche Flächenbereiche der Maske (14b, 14c) durchqueren und auf dem Projektionsschirm (16) eine gemeinsame Projektionsfläche einnehmen.

4. Optische Projektionsvorrichtung nach Anspruch 3, bei der die mehreren Punktlichtquellen (10b, 10c) selektiv aktivierbar sind.

5. Optische Projektionsvorrichtung nach einem der vorstehenden Ansprüche, mit einer Streuscheibe als Projektionsschirm (16).

6. Optische Projektionsvorrichtung nach einem der vorstehenden Ansprüche, bei der die von einer Austrittsfläche der optischen Linse (18, 18a, 18b, 18c) ausgehenden Projektionsstrahlen, die die bereichsweise lichtdurchlässige Maske (14, 14b, 14c) durchqueren, direkt auf eine Projektionsfläche des Projektionsschirms (16) treffen.

7. Symbol-Anzeigeelement für einen Fahrzeug-Innenraum, mit einer optischen Projektionsvorrichtung nach einem der vorhergehenden Ansprüche, bei welcher der Projektionsschirm (16) durch eine Frontabdeckung des Symbol-Anzeigeelements gebildet ist.

## Claims

1. An optical projection device for a vehicle interior, comprising a plurality of point light sources (10, 10b, 10c), a projection screen (16), a mask (14, 14b, 14c) that is arranged in the light path upstream of the projection screen (16) and is light-transmissive in some areas, and a plurality of light focusing optical lenses (18, 18a, 18b, 18c) which are each associated with one of the point light sources (10, 10b, 10c) and are arranged between the associated point light source (10, 10b, 10c) and the mask (14, 14b, 14c), wherein the prolongations of the emerging beams of the optical lenses (18, 18a, 18b, 18c) on the side thereof facing the point light source (10, 10b, 10c) each intersect in a virtual perspective center (10a) which is more remote from the lens (18, 18a, 18b, 18c) than the point light source (10, 10b, 10c), wherein a plurality of the optical lenses (18, 18a, 18b, 18c), each with the associated point light source (10, 10b, 10c), are arranged so as to be oppositely tilted with respect to the planes of the projection screen and the mask (14, 14b, 14c), **characterized in that** the projection beams emerging from the plurality of point light sources (10b, 10c) and exiting from the associated lenses (18b, 18c) are optically screened from each other up to the mask (14b, 14c).

2. The optical projection device according to claim 1, wherein the optical lens (18, 18a, 18b, 18c) includes a convex exit face and a planar or concave entrance face.

3. The optical projection device according to claim 1 or 2, wherein the projection beams emerging from the plurality of point light sources (10b, 10c) and exiting from the associated lenses (18b, 18c) pass through different surface regions of the mask (14b, 14c) and occupy a common projected area on the projection screen (16).

4. The optical projection device according to claim 3, wherein the plurality of point light sources (10b, 10c) are adapted to be selectively activated.

5. The optical projection device according to any of the preceding claims, comprising a diffusion disk as the projection screen (16).

6. The optical projection device according to any of the preceding claims, wherein the projection beams emerging from an exit face of the optical lens (18, 18a, 18b, 18c) and passing through the mask (14, 14b, 14c) that is light-transmissive in some areas directly impinge on a projected area of the projection screen (16).

7. An icon display element for a vehicle interior, comprising an optical projection device according to any of the preceding claims, wherein the projection screen (16) is formed by a front cover of the icon display element.

## Revendications

1. Dispositif de projection optique pour un habitacle de véhicule, comportant plusieurs sources lumineuses ponctuelles (10, 10b, 10c), un écran de projection (16), un masque (14, 14b, 14c) qui est agencé dans la trajectoire des rayons en amont de l'écran de projection (16) et qui est transparent par zones, et plusieurs lentilles optiques (18, 18a, 18b, 18c) qui focalisent la lumière, qui sont chacune associées à l'une des sources lumineuses ponctuelles (10, 10b, 10c) et qui sont agencées entre la source lumineuse ponctuelle (10, 10b, 10c) associée et le masque (14, 14b, 14c), les prolongements des rayons de sortie des lentilles optiques (18, 18a, 18b, 18c) se coupant de leur côté tourné vers la source lumineuse ponctuelle (10, 10b, 10c) dans un centre de projection virtuel (10a) qui est plus éloigné de la lentille (18, 18a, 18b, 18c) que la source lumineuse ponctuelle (10, 10b, 10c), plusieurs des lentilles optiques (18, 18a, 18b, 18c), chacune avec la source lumineuse ponctuelle (10, 10b, 10c) associée, étant agencées basculées de manière opposée par rapport aux plans de l'écran de projection et du masque (14, 14b, 14c), **caractérisé en ce que** les rayons de projection partant des plusieurs sources lumineuses ponctuelles (10b, 10c) et sortant des lentilles (18b, 18c) associées sont optiquement blindés les uns contre les autres jusqu'au masque (14b, 14c).

2. Dispositif de projection optique selon la revendication 1, dans lequel la lentille optique (18, 18a, 18b, 18c) présente une surface de sortie convexe et une surface d'entrée plane ou concave.

3. Dispositif de projection optique selon la revendication 1 ou 2, dans lequel les rayons de projection partant des plusieurs sources lumineuses ponctuelles (10b, 10c) et sortant des lentilles (18b, 18c) associées traversent différentes zones de surface du masque (14b, 14c) et occupent une surface de projection commune sur l'écran de projection (16).

4. Dispositif de projection optique selon la revendication 3, dans lequel les plusieurs sources lumineuses optiques (10b, 10c) sont aptes à être activées de manière sélective.

5. Dispositif de projection optique selon l'une des revendications précédentes, présentant un disque de diffusion en tant qu'écran de projection (16).

6. Dispositif de projection optique selon l'une des revendications précédentes, dans lequel les rayons de projection partant d'une surface de sortie de la lentille optique (18, 18a, 18b, 18c) et traversant le masque (14, 14b, 14c) qui est transparent par zones sont directement incidents sur une surface de projection de l'écran de projection (16).

7. Élément d'affichage à symbole pour un habitacle de véhicule, comportant un dispositif de projection optique selon l'une des revendications précédentes, dans lequel l'écran de projection (16) est formé par un recouvrement avant de l'élément d'affichage à symbole.
